# EUROPÄISCHE PATENTANMELDUNG

(11) **EP 1 353 309 A2**
(43) Veröffentlichungstag der Anmeldung: **15.10.2003**
(21) Anmeldenummer: 03001402.1
(22) Anmeldetag: 22.01.2003
(51) Int. Cl.: G09B 9/05

(54) **Verfahren und Vorrichtung zur Sichtdarstellung eines simulierten Verkehrsszenarios**

(30) Priorität: 09.04.2002 DE 10215480
(71) Anmelder: STN ATLAS Elektronik GmbH, 28305 Bremen (DE)
(72) Erfinder: Bildstein, Frank, 27299 Langwedel (DE); Körner, Eva-Susanne, 28857 Syke (DE)
(74) Vertreter: Thul, Hermann, Dipl.-Phys.

(57) **Zusammenfassung**

Bei einem Verfahren zur Sichtdarstellung eines simulierten Verkehrsszenarios in einem Ausbildungssimulator zum Trainieren von Fahrschülern im Führen eines Übungsfahrzeugs im Straßenverkehr wird dem Fahrschüler ein fortlaufend der Verkehrssituation angepaßtes Bild der Fahrzeugumgebung auf einem Bildschirm (12) dargeboten, indem aus für den Straßenverkehr mit Rechtsfahrgebot abgespeicherten, digitalen Daten von Grundgelände, Modellen und Texturen für eine Vielzahl verschiedener Übungsgebiete ein sich fortlaufend änderndes Bild eines Verkehrsszenarios in einer ausgewählten Übungsumgebung berechnet und mittels einer Projektionseinheit (15) auf dem Bildschirm (12) dargestellt wird. Zum Trainieren der Fahrschüler auch im Straßenverkehr mit Linksfahrgebot ohne bzw. nur minimalen Änderungen der abgespeicherten digitalen Daten wird für eine Darstellung desselben Verkehrsszenarios für den Straßenverkehr mit Linksfahrgebot das berechnete Bild horizontal gespiegelt projiziert

## Beschreibung

Die Erfindung betrifft ein Verfahren zur Sichtdarstellung eines simulierten Verkehrsszenarios in einem Ausbildungssimulator zum Trainieren von Fahrschülern im Führen eines Übungsfahrzeugs im Straßenverkehr der im Oberbegriff des Anspruchs 1 definierten Gattung.

Ein solcher Ausbildungssimulator, kurz Fahrsimulator genannt, dient einer kostengünstigen und effizienten Ausbildung von Fahrschülern und der risikolosen Vorbereitung der Fahrschüler auf den realen Straßenverkehr, um das Unfall- und Gefährdungspotential bei Aufnahme des realen Fahrbetriebs durch die Fahrschüler mit einem Eigenfahrzeug zu senken.

Eine wichtige Komponente des Simulators bildet dabei die visuelle Sichtdarstellung einer Fahrzeugumgebung mit wechselnder Verkehrssituationsdarstellung für den Fahrschüler. Hierzu ist eine Datenbasis vorgesehen, die alle visuellen Informationen zur Sichtdarstellung, d.h. Grundgelände, Modelle von stationären und mobilen Objekten, wie Häusern und andere Verkehrsteilnehmern, und Texturen für verschiedene, fallweise auswählbare Übungsgebiete sowie Steuerdaten zur korrekten, koordinierten Steuerung des momentanen Verkehrszenarios und des Übungsfahrzeugs in digitalisierter Form enthält. Um die abzuspeichernde Datenmenge in Grenzen zu halten, werden Daten, z.B. für das Grundgelände, durch Digitalisieren fotografischer Abbildungen von Straßenabschnitten und Geländeausschnitten mit vorgegebenem Straßenverlauf und vorhandener Straßenbeschilderung gewonnen, die als Flächen abgespeichert werden und bei der Bildgenerierung für die Sichtdarstellung beliebig zu einer gewünschten Übungsumgebung mit einem sich fortlaufend ändernden Verkehrsszenarios zusammengesetzt werden. Naturgemäß spiegeln solche fotografischen Abbildungen den hierzulande herrschenden Rechtsverkehr wider, so daß die in der Datenbasis abgelegten Daten für den Rechtsverkehr ausgelegt sind und auch die Steuerdaten zur koordinierten Steuerung von Sichtdarstellung und Übungsfahrzeug sowie die Hardwarekomponenten des Ausbildungssimulators, wie Fahrerstand etc. für den Straßenverkehr mit Rechtsfahrgebot ausgelegt sind. Bei einem Export eines solchen Ausbildungssimulators in Länder mit Linksverkehr muß daher der komplette Simulator, einschließlich Datenbasis, Steuerrechner, Steuerdaten und Steuersoftware neu konzipiert werden.

Der Erfindung liegt die Aufgabe zugrunde, ein Verfahren zur Sichtdarstellung eines simulierten Verkehrsszenarios anzugeben, mit dem ein für Rechtsverkehr ausgelegter Ausbildungssimulator durch nur minimale Änderungen auf eine Darstellung des simulierten Verkehrsszenarios im Linksverkehr umgestellt werden kann.

Die Aufgabe ist durch die Merkmale des Anspruchs 1 gelöst.

Das erfindungsgemäße Verfahren hat den Vorteil, daß es die Möglichkeit eröffnet, mit nur geringem Umschaltaufwand und insbesondere ohne Änderung der Steuerdaten und -software in der Datenbasis einen für Rechtsverkehr ausgelegten Fahrsimulator auch für die Ausbildung von Fahrschülern im Straßenverkehr mit Linksfahrgebot einsetzen zu können. Ein solcher Ausbildungssimulator kann damit wahlweise als Trainingsgerät im Rechts- und im Linksverkehr eingesetzt werden und ist damit auch universell exportfähig. Bei der erfindungsgemäßen horizontalen Spiegelung wird eine Spiegelung der fortlaufend berechneten Bilder an der vertikalen Bildmittenachse als Symmetrie- oder Spiegelachse durchgeführt, so daß eine seitenverkehrte Darstellung des Bilds auf dem Bildschirm erfolgt.

Zweckmäßige Ausführungsformen des erfindungsgemäßen Verfahrens mit vorteilhaften Weiterbildungen und Ausgestaltungen ergeben sich aus den Ansprüchen 2 bis 8.

Gemäß einer bevorzugten Ausführungsform der Erfindung wird das Bild des Verkehrsszenarios als ein aus einer Vielzahl von Pixeln zusammengesetztes Rasterbild berechnet und die horizontale Spiegelung im Rasterbild vorgenommen. Diese Spiegelung des Rasterbilds kann auf verschiedene Weise durchgeführt werden.

Gemäß einer bevorzugten Ausführungsform der Erfindung wird die horizontale Spiegelung in der Weise durchgeführt, daß das Rasterbild mit in 2^{m} Spalten und 2ⁿ Reihen angeordneten Pixeln in einem Speicher abgespeichert wird und vor Auslesen des Speichers eine Umspeicherung der Pixel in der Weise vorgenommen wird, daß die Pixelverteilung an einer zu den Spalten parallelen Mittellinie des Rasterbilds gespiegelt wird. Alternativ kann auch das Rasterbild in einem Speicher abgespeichert werden und zur horizontalen Spiegelung aus dem Speicher spiegelverkehrt, also beginnend in der letzten Spalte des Rasterbilds, ausgelesen werden. Als weitere Alternative kann eine horizontale Spiegelung auch dadurch erreicht werden, daß das Rasterbild mit in 2^{m} Spalten und 2ⁿ Reihen angeordneten Pixeln berechnet und gleich spiegelverkehrt in den Speicher eingeschrieben wird, so daß das erste Pixel des Rasterbilds in die m-te Spalte der ersten Reihe und das letzte Pixel des Rasterbilds in die erste Spalte der n-ten Reihe des Speichers eingeschrieben wird.

Soweit es in bestimmten Anwendungsfällen störend ist, daß durch die Spiegelung des Rasterbilds auch im Rasterbild enthaltene alphanumerische Zeichenzusammensetzung, z.B. Schriftbilder, Zahlen, Wörter, Buchstaben, spiegelverkehrt auf dem Bildschirm abgebildet werden, wird dies gemäß einer bevorzugten Ausführungsform der Erfindung dadurch beseitigt, daß die Texturen in eine nur Bildelemente enthaltende 1.Gruppe und eine alphanumerische Zeichen enthaltende 2.Gruppe aufgeteilt werden und daß bei Umstellung der Übungsumgebung auf Straßenverkehr mit Linksfahrgebot die Texturen der 2.Gruppe spiegelverkehrt in die Berechnung des Bilds des Verkehrsszenarios einbezogen werden. Dadurch werden die Texturen der 2.Gruppe zweimal gespiegelt, so daß sie wieder in der richtigen, für den Fahrschüler lesbaren Form auf dem Bildschirm erscheinen.

Eine vorteilhafte Vorrichtung zum Durchführen des erfindungsgemäßen Verfahrens ist in Anspruch 9 angegeben.

Zweckmäßige Ausführungsformen der erfindungsgemäßen Vorrichtung mit vorteilhaften Weiterbildungen und Ausgestaltungen der Erfindung finden sich in den Ansprüchen 10 bis 12.

Ein Ausbildungssimulator, in dem das erfindungsgemäße Verfahren implementiert ist, ist Gegenstand des Anspruchs 13. Eine zweckmäßige Ausführungsform des erfindungsgemäßen Ausbildungssimulators mit vorteilhafter Weiterbildung und Ausgestaltung der Erfindung ist Gegenstand des Anspruchs 14.

Die Erfindung ist anhand eines in der Zeichnung dargestellten Ausführungsbeispiels eines Fahrsimulators im folgenden näher beschrieben. Es zeigen:
- Fig. 1: ein Blockschaltbild eines Fahrsimulators mit einer Vorrichtung zur Darstellung eines simulierten Verkehrsszenarios,
- Fig. 2: ein Beispiel für einen auf einen Bildschirm einer Sichtdarstellungs-Vorrichtung projizierten Straßenausschnitt für Stadtverkehr mit Rechtsfahrgebot,
- Fig. 3: den Straßenausschnitt in Fig. 2, umgestellt auf Stadtverkehr mit Linksfahrgebot,
- Fig. 4: der Straßenausschnitt in Fig. 3 mit wieder abbildungsrichtig hergestellter Beschriftung auf der Häuserfassade,
- Fig. 5: ein Beispiel für einen auf einen Bildschirm der Sichtdarstellungs-Vorrichtung projizierten Straßenabschnitt für Straßenverkehr mit Rechtsfahrgebot,
- Fig. 6: den Straßenabschnitt in Fig. 5, umgestellt auf Straßenverkehr mit Linksfahrgebot,
- Fig. 7: den Straßenabschnitt in Fig. 6 mit wieder abbildungsrichtig hergestellter Beschriftung der Verkehrsschilder.

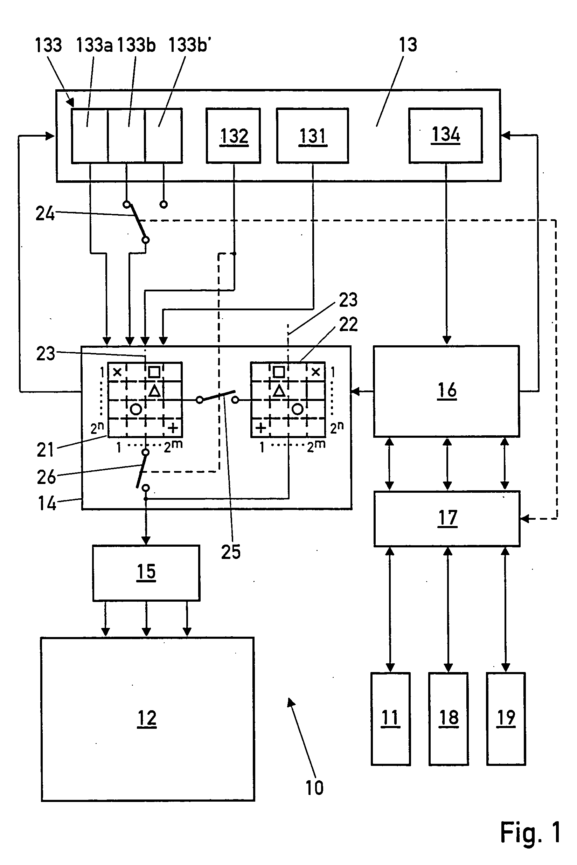

Der in Fig. 1 im Blockschaltbild dargestellte Ausbildungssimulator zum Trainieren von Fahrschülern im Führen eines Übungsfahrzeugs im Straßenverkehr, kurz Fahrsimulator genannt, weist einen dem Übungsfahrzeug nachgebildeten, mit Bedienungs- und Fahrkomponenten ausgestatteten Fahrstand 11 auf, vor dessen Frontscheibe ein Bildschirm 12 einer Vorrichtung zur Sichtdarstellung eines simulierten Verkehrsszenarios angeordnet ist. Wesentliche Komponente der Vorrichtung zur Sichtdarstellung 10 ist die Datenbasis 13, in der für eine Vielzahl von verschiedenen Übungsgebieten Daten von Grundgelände 131, wie Straßen, Schienenstrecken, Gebäudeflächen, Landschaften, Hausfassaden und dgl., von Modellen 132 stationärer Objekte, wie Verkehrsschilder, Ampeln, Bäume und dgl., und mobiler Objekte, z.B. andere Verkehrsteilnehmer, wie Fußgänger, Fahrzeuge, und von Texturen 133, wie z.B. Fassadengestaltungen, Fenster, Türen, Beschriftungen von Verkehrsschildern, Häuserfassaden und Straßenschildern, Fahrgebotspfeile auf Straßen und Verkehrsschildern, sowie zusätzlich Steuerdaten 134 zur koordinierten Steuerung des Übungsfahrzeugs und der Sichtdarstellung abgespeichert sind. Dabei sind alle Daten aus Verkehrsverhältnissen abgeleitet, wie sie beim Straßenverkehr mit Rechtsfahrgebot auftreten, so daß ihr Abrufen zwecks Erzeugung eines gewünschten Verkehrsszenarios ein solches für Rechtsverkehr ergibt. Zur Reduzierung der zu speichernden Daten sind Grundgelände und Modelle als Flächen abgespeichert, die bei der Bildgenerierung miteinander kombiniert werden. Die Texturen werden dabei auf die Flächen des Grundgeländes und auf die Flächen der Modelle aufgelegt.

Weitere Komponenten der Vorrichtung zur Sichtdarstellung 10 ist ein auf die Datenbasis 13 zugreifender Bildgenerator 14 zur Erzeugung eines Rasterbilds des gewünschten Verkehrsszenarios sowie eine Projektionseinheit 15 zur Visualisierung des Rasterbilds auf dem Bildschirm 12. Weitere Komponenten des Fahrsimulators sind der auf die Steuerdaten 134 der Datenbasis 13 zugreifende Steuerrechner 16, auch Basissimulator genannt, und eine Schnittstelleneinheit 17, die den Steuerrechner 16 an den Fahrstand 11, an ein Bewegungssystem 18 für den Fahrstand 11 und an einem Akustikgenerator 19 zur Erzeugung von typischen Straßenverkehrsgeräuschen anschließt. Die Steuerdaten 134 beschreiben z.B. die Fahrspuren, Gehwege, Überwege, Schienenverläufe, Hindernisse und das Höhenprofil und dienen der koordinierten Steuerung des Übungsfahrzeugs und der Sichtdarstellung. Der Steuerrechner 16 steuert entsprechend den Lenkvorgaben aus dem Fahrerstand 11 den Bildgenerator 14, der die Generierung des Rasterbilds laufend an die Fahrmanöver des vom Fahrstand 11 aus von dem Fahrschüler gelenkten Übungsfahrzeugs anpaßt.

Mit der vorstehend beschriebenen Vorrichtung zur Sichtdarstellung eines simulierten Verkehrsszenarios wird in dem Fahrsimulator die Sichtdarstellung nach folgendem Verfahren durchgeführt:

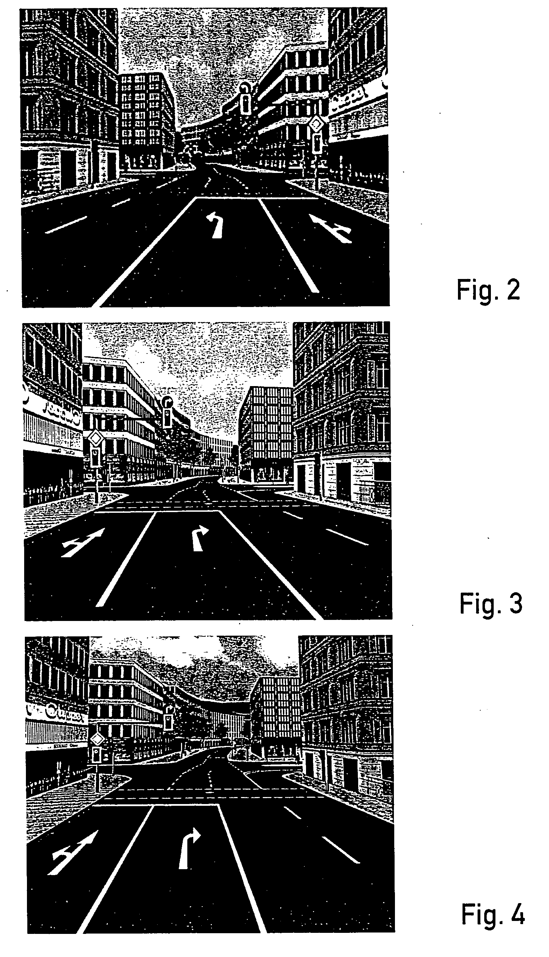

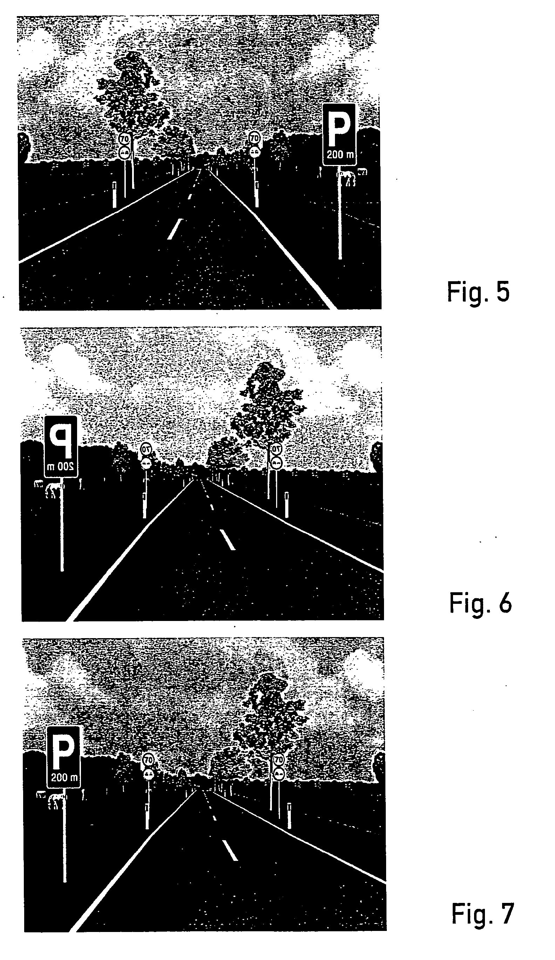

Aus den im Datenspeicher 13 abgespeicherten Daten von Grundgelände 131, Modellen 132 und Texturen 133 werden für eine vom Fahrlehrer ausgewählte Übungsumgebung nach den Vorgaben des Steuerrechners 16 entsprechende Daten vom Bildgenerator 14 ausgelesen und ein Rasterbild generiert, das aus einer Vielzahl von Pixeln oder Bildpunkte zusammengesetzt ist, die in 2^{m} Spalten und 2ⁿ Reihen angeordnet sind. Dieses Rasterbild wird in einem Speicher 21 abgespeichert und aus dem Speicher 21 heraus von der Projektionseinheit 15 in eine visuelle Bilddarstellung auf dem Bildschirm 12 umgesetzt, wobei das dem Fahrschüler auf dem Bildschirm 12 sichtbar gemachte Verkehrsszenario für Rechtsverkehr gültig ist. Zwei Beispiele für eine solche Abbildung des Verkehrsszenarios auf dem Bildschirm 12, bei dem der Übersichtlichkeit halber auf fremde Verkehrsteilnehmer verzichtet worden ist, ist in Fig. 2 und 5 dargestellt. Fig. 2 zeigt dabei einen Ausschnitt aus dem innerstädtischen Straßenverkehr, während in Fig. 5 ein Straßenabschnitt einer Landstraße simuliert ist. Entsprechend der simulierten Fahrbewegung des Übungsfahrzeugs wird dieses Abbild des simulierten Verkehrsszenarios laufend der simulierten Bewegung des Übungsfahrzeugs angepaßt.

Soll nunmehr der Fahrschüler mit dem Übungsfahrzeug im Linksverkehr geschult werden, so wird das wie beschrieben ablaufende Verfahren nur insofern geändert, als nunmehr vor der Darstellung des vom Bildgenerator 14 generierten Rasterbilds durch die Projektionseinheit 15 das Rasterbild horizontal gespiegelt wird. Diese horizontale Spiegelung des Rasterbilds erfolgt beispielsweise in der Weise, daß vor Auslesen des Speichers 21 eine Umspeicherung der Pixel in der Weise vorgenommen wird, daß die Pixelverteilung an einer zu den Spalten parallelen Mittellinie des Rasterbilds gespiegelt wird. Im Blockschaltbild der Fig. 1 ist zur Verdeutlichung dieser Umspeicherung beispielhaft ein zweiter Speicher 22 mit dem ersten Speicher 21 zu einer Speichereinheit zusammengefaßt, in der die Umspeicherung dadurch erfolgt, daß der Speicherinhalt des ersten Speichers 21 spiegelverkehrt in den zweiten Speicher 22 eingelesen wird, wozu die Pixel einer jeden aus dem Speicher 21 ausgelesenen Zeile rückwärts, d.h. beginnend mit der letzten Spalte und endend mit der ersten Spalte, in gleicher Zeilenfolge in den Speicher 22 eingeschrieben wird. Das im Speicher 22 abgelegte Rasterbild wird dann in üblicher Weise Zeile für Zeile ausgelesen und der Projektionseinheit 15 zugeführt, die das Rasterbild auf den Bildschirm 12 projiziert. Das auf dem Bildschirm 12 erscheinende Verkehrsszenario ist in Fig. 3 für das erste Beispiel und in Fig. 6 für das zweite Beispiel dargestellt. Deutlich ist eine Spiegelung der Bilder zu sehen, wobei jedoch alle Markierungspfeile und Straßenschilder korrekt für den Straßenverkehr mit Linksfahrgebot dargestellt sind.

Zur Verdeutlichung der horizontalen Spiegelung des Rasterbilds durch Umspeicherung sind in Fig. 1 in dem Speicher 21 und Speicher 22 verschiedene Symbole für Pixel dargestellt. Durch diese verschiedenen Symbole wird verdeutlicht, daß bei Umspeicherung des im Speicher 21 für Rechtsverkehr abgelegten Rasterbilds in den Speicher 22 das Rasterbild an einer parallel zu den Spalten verlaufenden Mittellinie 23 gespiegelt wird.

Zur Symbolisierung der Umstellung in der Darstellung des Verkehrsszenarios im Rechtsverkehr auf dasselbe Verkehrsszenario im Linksverkehr sind im Blockschaltbild der Fig. 1 die Schalter 24, 25 und 26 eingezeichnet. Wird der Schalter 25 geschlossen, so erfolgt eine Umspeicherung in den Speicher 22 mit einer Spiegelung des im Speicher 21 enthaltenen Rasterbilds und ein Anschließen des Speichers 22 mit dem gespiegelten Rasterbild an die Projektionseinheit 15. Gleichzeitig wird der Schalter 26 geöffnet und der Speicher 21 von der Projektionseinheit 15 getrennt.

Alternativ kann die horizontale Spiegelung auch in der Weise durchgeführt werden, daß nur ein Speicher vorgesehen ist, in dem das Rasterbild mit in 2^{m} Spalten und 2ⁿ Reihen angeordneten Pixeln abgespeichert wird und bei Umschalten auf Linksverkehr das Rasterbild spiegelsymmetrisch aus dem Speicher ausgelesen wird, indem das zeilenmäßige Auslesen des Speichers mit dem in der letzten Spalte und ersten Zeile abgespeicherten Pixel beginnt.

Alternativ können auch in nur einen Speicher mit 2^{m} Spalten und 2ⁿ Reihen die Pixel bereits spiegelverkehrt eingeschrieben werden, indem das erste Pixel in die m-te Spalte der 1.Reihe und das letzte Pixel in die 1.Spalte der n-ten Reihe eingeschrieben wird.

Wie aus den in Fig. 3 und 6 dargestellten, visualisierten Abbildungen der gespiegelten Rasterbilder entnommen werden kann, sind bestimmte Texturen fehlerhaft dargestellt, z.B. in Fig. 3 die Firmenaufschrift an der linken Hausfassade oder in Fig. 6 die Beschriftung der Verkehrszeichen, die in Spiegelschrift erscheinen. Bei dem Verkehrsszenario gemäß Fig. 3 ist diese falsche Wiedergabe wenig störend, im Gegensatz zu Fig. 6, in der wichtige Verkehrsinformationen nicht lesbar sind. Um diesen Fehler zu beseitigen, werden in weiterer Ausgestaltung des beschriebenen Verfahrens die zur Berechnung des Rasterbilds verwendeten Texturen, die aus Zusammensetzungen von alphanumerischen Zeichen bestehen, also z.B. Wörter oder Zahlenangaben, im Beispiel des Verkehrsszenarios in Fig. 6 die auf die Verkehrsschilder aufgelegte Beschriftung, spiegelverkehrt in die Berechnung des Rasterbilds einbezogen. Für diesen Fall sind die Texturen in eine nur Bildelemente enthaltende 1.Gruppe 133a und eine alphanumerische Zeichen, d.h. Buchstaben, Zahlen und Zusammensetzungen davon, enthaltende 2.Gruppe 133b aufgeteilt. Die 2.Gruppe der Texturen ist einmal ungespiegelt in ihrer Grundform und einmal gespiegelt in ihrer Spiegelform 133b' abgespeichert. Bei der beschriebenen Generierung des Rasterbilds werden nur die gespiegelten Texturen der 2.Gruppe 133b' herangezogen, wozu bei der Umstellung auf Linksverkehr der in Fig. 1 symbolisch dargestellte Schalter 24 umzulegen ist. Bei der anschließenden, wie vorstehend beschriebenen Spiegelung des generierten Rasterbilds werden die auf diese Weise bereits "vorgespiegelten" Texturen der 2.Gruppe 133b' nochmals mitgespiegelt, so daß sie nunmehr im visualisierten Bild auf dem Bildschirm 12 korrekt erscheinen, wie dies in Fig. 4 und 7 zu sehen ist.

Bei der Umstellung des Fahrsimulators auf Training im Straßenverkehr mit Linksfahrgebot müssen neben der Umschaltung der Vorrichtung zur Sichtdarstellung 10 auch die Schnittstellen in der Schnittstelleneinheit 17 zwischen Steuerrechner 16 und Fahrstand 11 bzw. Bewegungssystem 18 bzw. Akustikgenerator 19 gespiegelt werden, was durch die an die Schnittstelleneinheit 17 strichliniert herangeführte Wirklinie symbolisiert ist; denn beispielsweise muß bei einer vom Fahrschüler ausgeführten Lenkradbewegung nach rechts oder links eine entsprechend korrigierte Steuerung des Übungsfahrzeugs und der in das Verkehrsszenario eingebauten fremden Verkehrsteilnehmer korrekt für den Linksverkehr erfolgen. Die Spiegelung der Schnittstellen in der Schnittstelleneinheit 17 wird durch entsprechende Softwareanpassung herbeigeführt. Der Steuerrechner 16 mit der Steuersoftware sowie die Steuerdaten 134 bleiben jedoch selbst unverändert, d.h. im Rechtsverkehr-Modus, was eine erhebliche Vereinfachung bei der Umstellung auf den Linksverkehr-Modus bedeutet.

Ist der erfindungsgemäße Ausbildungssimulator für den Export in Ländern mit Linksverkehr vorgesehen, so müssen ggf. auch Hardwarekomponenten verändert werden, z.B. kann der Fahrstand 11 so umgerüstet werden, daß das Steuerrad auf der rechten Seite des Fahrstands 11 angeordnet ist. Mit einem solch umgerüsteten Fahrstand 11 läßt sich dann in gleicher Weise mit einem Fahrzeug mit Rechtssteuerung sowohl das Fahren im üblichen Linksverkehr als auch die Teilnahme am Rechtsverkehr trainieren.

Die Erfindung ist nicht auf das beschriebene Ausführungsbeispiel beschränkt. So muß die Spiegelung des berechneten Bilds nicht im Rasterbild selbst durchgeführt werden, das dann als gespiegeltes Bild der Bildprojektionseinheit 15 zugeführt und von dieser projiziert wird. Die Bildprojektionseinheit 15 kann softwaremäßig auch so konzipiert sein, daß sie das ihr zugeführte für den Rechtsverkehr-Modus berechnete Rasterbild vor dessen Projektion horizontal spiegelt und damit seitenverkehrt auf dem Bildschirm 12 wirft.

## Patentansprüche

1. Verfahren zur Sichtdarstellung eines simulierten Verkehrsszenarios in einem Ausbildungssimulator zum Trainieren von Fahrschülern im Führen eines Übungsfahrzeugs im Straßenverkehr, bei dem dem Fahrschüler ein fortlaufend der Verkehrssituation angepaßtes Bild der Fahrzeugumgebung auf einem Bildschirm (12) dargeboten wird, indem aus für den Straßenverkehr mit Rechtsfahrgebot abgespeicherten, digitalen Daten von mindestens einem Grundgelände mit Straßenverlauf für eine Vielzahl verschiedener Übungsgebiete und von dem Grundgelände zuordenbaren Modellen (132) stationärer und mobiler Objekte sowie von auf Grundgelände und Modelle auflegbaren Texturen ein sich fortlaufend änderndes Bild eines Verkehrsszenarios in einer ausgewählten Übungsumgebung berechnet und mittels einer Projektionseinheit (15) auf dem Bildschirm (12) dargestellt wird, **dadurch gekennzeichnet, daß** zur Umstellung der Übungsumgebung auf Straßenverkehr mit Linksfahrgebot das berechnete Bild horizontal gespiegelt projiziert wird.

2. Verfahren nach Anspruch 1, **dadurch gekennzeichnet, daß** das Bild des Verkehrsszenarios als ein aus einer Vielzahl von Pixeln zusammengesetztes Rasterbild berechnet, die horizontale Spiegelung im Rasterbild vorgenommen und das horizontal gespiegelte Rasterbild der Bildprojektionseinheit (15) zugeführt wird.

3. Verfahren nach Anspruch 2, **dadurch gekennzeichnet, daß** zur horizontalen Spiegelung das Rasterbild mit in 2^{m} Spalten und 2ⁿ Reihen angeordneten Pixeln in einem Speicher abgespeichert wird und daß das Rasterbild spiegelverkehrt, beginnend in der letzten Spalte des Rasterbilds, aus dem Speicher zeilenweise ausgelesen wird.

4. Verfahren nach Anspruch 2, **dadurch gekennzeichnet, daß** zur horizontalen Spiegelung das Rasterbild mit in 2^{m} Spalten und 2ⁿ Reihen angeordneten Pixeln in einer Speichereinheit (21, 22) abgespeichert wird und daß eine Umspeicherung der Pixel in der Weise vorgenommen wird, daß die Pixelverteilung an einer zu den Spalten parallelen Mittellinie (23) des Rasterbilds gespiegelt wird.

5. Verfahren nach Anspruch 2, **dadurch gekennzeichnet, daß** zur horizontalen Spiegelung das Rasterbild mit in 2^{m} Spalten und 2ⁿ Reihen angeordneten Pixeln berechnet und spiegelverkehrt in den Speicher eingeschrieben wird.

6. Verfahren nach einem der Ansprüche 1 - 5, **dadurch gekennzeichnet, daß** die Texturen (133) in eine nur Bildelemente enthaltende 1.Gruppe (133a) und eine nur alphanumerische Zeichen enthaltende 2.Gruppe (133b) aufgeteilt wird und daß bei Umstellung der Übungsumgebung auf Straßenverkehr mit Linksfahrgebot die Texturen der 2.Gruppe (133b) spiegelverkehrt in die Berechnung des Bilds des Verkehrsszenarios einbezogen werden.

7. Verfahren nach Anspruch 6, **dadurch gekennzeichnet, daß** in der Datenbasis (13) die Texturen der 2. Gruppe (133b) einmal ungespiegelt in ihrer Grundform und einmal gespiegelt in ihrer Spiegelform (133b') abgespeichert werden.

8. Verfahren nach Anspruch 6 und 7, **dadurch gekennzeichnet, daß** bei der Berechnung des Bilds des Verkehrsszenarios für den Straßenverkehr mit Linksfahrgebot die Spiegelform (133b') der Texturen der 2. Gruppe (133b) abgerufen wird.

9. Vorrichtung zur Sichtdarstellung eines simulierten Verkehrsszenarios in einem Ausbildungssimulator zum Trainieren von Fahrschülern im Führen eines Übungsfahrzeugs im Straßenverkehr, mit einer Datenbasis (13), in der für eine Vielzahl verschiedener Übungsgebiete für den Straßenverkehr mit Rechtsfahrgebot aufbereitete, digitale Daten mindestens eines Grundgeländes (131) mit Straßenverlauf, von dem Grundgelände zuordenbaren Modellen (132) stationärer und mobiler Objekte und von auf Grundgelände und Objekte auflegbaren Texturen (133) abgespeichert sind, mit einem Bildgenerator (14), der aus Daten der Datenbasis (13) für eine ausgewählte Übungsumgebung ein sich fortlaufend änderndes Bild eines Verkehrsszenarios berechnet, und mit einer Bildprojektionseinheit (15), die das berechnete Bild in ein für den Fahrschüler visualisiertes Bild auf einen Bildschirm (12) projiziert, **dadurch gekennzeichnet, daß** nach Umstellung der Übungsumgebung auf Straßenverkehr mit Linksfahrgebot die Bildprojektionseinheit (15) das berechnete Bild horizontal gespiegelt projiziert.

10. Vorrichtung nach Anspruch 9, **gekennzeichnet durch** einen eingangsseitig an dem Bildgenerator (14) und ausgangsseitig an der Bildprojektionseinheit (15) angeschlossenen Bildspeicher (21), in dem das berechnete Bild als Rasterbild mit in 2^{m} Spalten und 2ⁿ Reihen angeordneten Pixeln abgespeichert ist und der spiegelverkehrt, beginnend mit der letzten Spalte, Zeile für Zeile auslesbar ist.

11. Vorrichtung nach Anspruch 9, **gekennzeichnet durch** eine eingangsseitig an dem Bildgenerator (14) und ausgangsseitig an der Bildprojektionseinheit (15) angeschlossenen Speichereinheit (21, 22), in der das als Rasterbild berechnete Bild mit in 2^{m} Spalten und 2ⁿ Reihen angeordneten Pixeln abgelegt ist und die zeilenmäßig, beginnend in der ersten Spalte der ersten Zeile, auslesbar ist, und **durch** eine vor dem Auslesen erfolgende Umspeicherung des Speicherinhalts derart, daß die Pixelverteilung an einer parallel zu den Spalten verlaufenden Mittellinie (23) des Rasterbilds gespiegelt ist.

12. Vorrichtung nach einem der Ansprüche 9 - 11, **dadurch gekennzeichnet, daß** die Texturen (133) als eine Bildelement enthaltende 1.Gruppe (133a) und eine alphanumerische Zeichen enthaltende 2.Gruppe (133b) und die Texturen der 2.Gruppe (133b) zusätzlich gespiegelt in ihrer Spiegelform (133b') gespeichert sind und daß bei Umstellung der Übungsumgebung auf Straßenverkehr mit Linksfahrgebot der Bildgenerator (14) bezüglich der Texturen der 2.Gruppe (133b') nur auf deren Spiegelform (133b') zugreift.

13. Ausbildungssimulator zum Trainieren von Fahrschülern im Führen eines Übungsfahrzeugs im Straßenverkehr, mit einem dem Ausbildungsfahrzeug nachgebildeten, mit Bedienungs- und Fahrkomponenten ausgestatteten Fahrstand (11), **gekennzeichnet durch** eine Vorrichtung zur Sichtdarstellung (10) nach einem der Ansprüche 9 bis 12.

14. Ausbildungssimulator nach Anspruch 13, **dadurch gekennzeichnet, daß** in der Datenbasis (13) zusätzlich Steuerdaten (134) zur im Rechtsverkehr richtigen, koordinierten Steuerung des Verkehrsszenarios und des Übungsfahrzeugs abgespeichert sind, daß ein die Steuerdaten verarbeitender Steuerrechner (16) über eine Schnittstelleneinheit (17) mit den Bedienungs- und Fahrkomponenten des Fahrstands (11) verbunden ist und daß bei Umstellung der Vorrichtung zur Sichtdarstellung (10) auf Straßenverkehr mit Linksfahrgebot in der Schnittstelleneinheit (17) eine Schnittstellenspiegelung, vorzugsweise durch Softwareanpassung, vorgenommen ist.
